# EUROPEAN PATENT SPECIFICATION

(11) **EP 2 463 561 B1**
(45) Date of publication and mention of the grant of the patent: **29.11.2017**
(21) Application number: 12153192.5
(22) Date of filing: 03.12.2008
(51) Int. Cl.: F16K 37/00

(54) **Device for actuating a process valve for use in foodstuffs technology**
Vorrichtung zur Auslösung eines Prozessventils zur Verwendung in der Lebensmitteltechnologie
Dispositif d'actionnement d'une vanne de processus à utiliser dans la technologie d'aliments

(30) Priority: 04.12.2007 DE 102007058253
(43) Date of publication of application: 13.06.2012
(62) Divisional of application: 08020981.0
(73) Proprietor: APV ROSISTA GMBH, 59425 Unna (DE)
(72) Inventor: Spliethoff, Norbert, 59302 Oelde (DE); Reich, Torsten, 59174 Kamen (DE); Tucholski, Christian, 44532 Lünen (DE)
(74) Representative: Grosse Schumacher Knauer von Hirschhausen

(56) References cited:
- EP-A2- 0 660 095
- DE-U1-202006 012 959
- GB-A- 2 138 108
- US-A- 5 197 508
- US-A- 5 223 822

## Description

The invention relates to a process valve actuation device for use in foodstuffs technology, according to the preamble of claim 1.

Devices according to the preamble of claim 1 are known in the art, for example the control unit distributed by the applicant for his SW4 valve.

In the case of the known devices for actuating a process valve, a sensor is provided, which determines the position of the process valve via the relative position of the magnet in relation to the sensor. In the case of the known devices for actuating a process valve, proximity switches, in particular inductive proximity switches or Hall-effect sensors, or magnetoresistive linear sensors, are used as a sensor. The individual proximity switches are only able to determine the presence of a magnet within a certain range.

Magnetoresistive linear sensors are expensive to purchase, and require a relatively large amount of structural space. In some cases, it is necessary for them to enclose the magnet.

In the case of the known devices for actuating a process valve for use in foodstuffs technology, there is provided a hood (for example, a sensor tower), which is entered by the actuating element (for example, a magnet lobe). The sensor is provided outside of the hood, and gives a signal concerning the relative position of the actuating element in the hood. For the purpose of indicating the relative position of the actuating element in respect of the sensor, in the case of known devices a series of light-emitting diodes is used, which indicate to the technician of the device for actuating a process valve the depth to which the actuating element has moved into, or engages in, the hood. This results in the disadvantage that the relative position of the actuating element in the hood is indicated only indirectly to the technician via the indication of the light-emitting diodes. Owing to the switching hysteresis of the proximity switches, the technician has no information about the centre setting of the magnet relative to the proximity switch. There is therefore an imprecision in the order of magnitude of the hysteresis, which can be in the order of magnitude of a plurality of millimetres. In addition, there is the disadvantage that it is necessary for the device to be connected to the electric power supply for it to be put into operation, or for setting the position of the proximity switches. In the case of a malfunction, therefore, the indication can impart of false information, which can lead to a subsequent failure of the installation.

GB 2 138 108 A refers to a valve unit for foodstuffs using an extended valve rod and a sensor unit for indicating two separate positions of the valve, namely the open and closed position. The position of the valve rod is measured by means of two inductive proximity switches that are arranged at the maximum and minimum vertical height of the axial deflection of the valve rod. However, GB'108 is completely silent on measuring valve positions of valves with a plurality of valve rods.

Accordingly it is an object of the present invention to provide an improved valve position identification for valves with a plurality of valve rods.

This object of the invention is achieved by means of the features of Claim 1. An advantageous development of the invention is specified in the dependent claim 2.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the sensor being a magnetostrictive sensor. In this case, the actuating element can be a magnet.

A valve member is considered to be a member used for opening and closing the valve. The valve member can also be named as final control element.

Magnetostrictive sensors are usually linear sensors that measure in a contactless manner. The position of an actuating element (for example, of a magnet) is determined over the time between the emission of a pulse supplied to the sensor and the detection of a structure-borne sound wave produced at the location at which the magnetic field produced by supplied electrical pulses coincides with the field of the magnet. The measured time is proportional to the measured travel, and is a measure of the position of the magnet, and thus of the valve movement.

The device according to the invention has the advantage that the position of the actuating element can be determined in a simple and robust manner. The sensor can be integrated in the device according to the invention in a space-saving manner. Persons skilled in the art are familiar with methods of performing runtime measurements with high precision in a simple and inexpensive manner. The result of a runtime measurement can be a digital signal (e.g. PWM), which can be processed directly by the evaluation unit. A disadvantage in the evaluation of signals of magnetoresistive sensors consists in that it is first necessary for the analog output signal to be converted into a digital signal, to enable it to be processed further in the microcontroller of the device.

The known devices for actuating a process valve for use in foodstuffs technology always have only one linear sensor, for determining the closed and open position of the valve, this being particularly important for process safety. This applies both to single-seat valves and to double-seat valves. In the case of double-seat valves, the upper or lower valve stem is also actuated independently of the respectively other valve stem, for example for cleaning of the double-seat valve. For the purpose of monitoring the functional capability of the lifting of a double-seat valve, however, it is also necessary to monitor the separate actuation of the upper and the lower valve stem. For this purpose, in the prior art, a linear sensor is used for one stem and a proximity switch is used for the other stem. Alternatively, proximity switches are used for both stems. Proximity switches can only provide information on whether an actuation has been effected in a certain range. They are subject to a switching hysteresis, and are therefore relatively imprecise. A single proximity switch is able to sense only a single given position. If a plurality of positions, for example the two end positions, are to be sensed, it is necessary for a corresponding multiplicity of proximity switches to be used, with the associated costs and space requirement.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the device for actuating a process valve for use in foodstuffs technology having a further sensor, the sensor and the further sensor being realized as linear sensors.

In the case of double-seat valves, according to this embodiment of the invention there is the advantage that the movement of the upper and the lower valve stem can be monitored over the entire stroke in a simple and precise manner by means of the two linear sensors. As an alternative to the monitoring of the movement of both valve stems over their entire stroke, it is also possible to effect monitoring of one valve stem over its entire stroke and monitoring of the other valve stem over a partial stroke (for example, a lifting stroke or a partial opening stroke).

Preferably, the device for actuating a process valve, according to this embodiment of the invention, can also have one or more features of the previously specified embodiments of the invention.

According to the invention, the sensor and/or the further sensor and/or a further sensor can be arranged in the device for actuating a process valve, or can be integrated therein.

According to the invention, at least one of said sensors is a magnetostrictive sensor.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the sensor or the sensors being arranged and/or realized in such a way that the position of an actuating element in front of the sensor is determined through measurement of the runtime of a structure-borne sound wave in the sensor.

Preferably the device for actuating a process valve, according to this embodiment of the invention, can also have one or more features of the previously specified embodiments of the invention.

Of the plurality of sensors, preferably one sensor can be designed for monitoring the relative position of a valve member, for example its closed position. In the case of a double-seat valve or another valve having at least two valve stems, for example, this sensor can be designed for monitoring the relative position of the upper valve stem.

According to the invention, a further sensor can be provided for monitoring the relative position of the lower valve stem.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the device for actuating a process valve having a sensor module comprising a hood (for example, a sensor tower), in which the actuating element is arranged or at least enters upon a valve member movement, the hood being realized at least partially or entirely from a translucent and/or transparent and/or non-opaque material.

Preferably, the device for actuating a process valve, according to this embodiment of the invention, can also have one or more features of the previously specified embodiments of the invention.

This embodiment of the invention has the advantage that the technician, when assembling, commissioning, operating and servicing the device according to the invention, is afforded a direct view of the actuating element (for example, a magnet) in the hood. In addition, a series of light-emitting diodes can also indicate the relative position of the actuating element in the hood. The technician, commissioner and the servicing personnel are also protected against injury, since the hood prevents, for example, the fingers from becoming caught on the actuating element, which is moving during the setting operation.

According to the invention, one or more windows of the translucent and/or transparent and/or non-opaque material can be realized in the hood.

According to the invention, the device can have a housing that is realized at least partially or entirely from a translucent and/or transparent and/or non-opaque material.

According to the invention, one or more windows of the translucent and/or transparent and/or non-opaque material can be realized in the housing.

This embodiment offers the advantage that, despite a housing arranged on the device, a view of the actuating element arranged on the valve stem is possible.

According to the invention, the sensor module can have one or more discrete, contactless sensors. In this case, the discrete, contactless sensor or sensors can be realized as magnetic proximity switches (for example, Hall-effect sensors) or as inductive proximity switches (in which case there is then provided, instead of the magnet, a suitable actuating element, realized from a suitable material, which enters the hood) or as optical proximity switches (for example, light barrier).

According to the invention, the hood of the sensor module can have a read-off device for reading the position of the actuating element. This has the advantage, that the valve position can be determined more accurately via the position of the actuating element, through reading of the position on the read-off device. For example, a scale having sub-divisions corresponding to a measuring scale can be provided as a read-off device.

According to the invention, the device can have a housing that is an injection-moulded part.

According to the invention, the device can have one or more control valve arrangements, which are preferably realized as control valves, and further preferably as solenoid valves.

According to the invention, the control valve arrangements can be constituted by control valves, preferably 3/2-way valves or 5/2-way valves. Alternatively, or in addition, according to the invention individual control valve arrangements can have a plurality of control valves, preferably a combination of a plurality of 2/2-way valves, which further preferably are connected according to an equivalent circuit diagram for a 3/2-way valve and/or a 5/2-way valve.

According to the invention, the device for actuating a process valve can be a control unit and/or circuit arrangement.

The device, according to the invention, for actuating a process valve can be present in a circuit arrangement or control unit that is arranged on the process valve, or it can be otherwise connected, as a circuit arrangement or control unit, to the process valve via electric leads and/or pneumatic lines. It can further be integrated in the process valve or a housing.

According to an advantageous development of the invention, the hood can be realized entirely from a translucent and/or transparent and/or non-opaque material.

In the context of the present invention, a translucent material means a material that, for example, is at least so transparent that the position of the actuating element in the hood is easily identifiable in normal lighting. For this purpose, the material of the hood can be at least so translucent that the actuating element can be identified at least in the form of a shadow. Advantageously, the transparency of the material is sufficient to enable the exact position of the actuating element to be easily identified. Obviously, the material can also be completely transparent.

According to the invention, the cover, or the housing, of the device for actuating a process valve can be realized, at least partially, from a translucent and/or transparent and/or non-opaque material.

According to the invention, the cover, or the outer housing, of the device can also be realized entirely from a translucent and/or transparent and/or non-opaque material, or have a window that is realized from a translucent and/or transparent and/or non-opaque material. The window can be realized by omission of the colouring pigments in the region, or it can be realized from another material.

According to the invention, a plurality of regions of the outer housing, or cover, of the device can also be realized from a translucent and/or transparent and/or non-opaque material, for example in the form of a series of windows. According to the invention, a fully transparent outer housing can be provided. This has the advantage that the production is less expensive.

The at least partial realization of the hood from a translucent and/or transparent and/or non-opaque material has the advantage that the lifting motion of the actuating element, and thus of the process valve, can be seen visually by the technician. The position of the actuating element, which is mounted, for example, on the extension of the valve rod for controlling the valve setting, is a direct measure of the position of the process valve. This is advantageous particularly in the case of the manual positioning of Hall-effect sensors, because a more precise verification of the closing function of the valve can be achieved by a more precise arrangement of the Hall-effect transistors.

In the case of the known devices for actuating a valve for uses in a foodstuffs technology, the sensor used for determining the relative position of the magnet is always integrated, with the associated electronic circuitry, in a component. For example, in the case of the CU3 device of APV ROSISTA GmbH, the sensor and the electronic circuitry are integrated in a component, and the tower accommodating the movement of the magnet, and the base part of the housing are provided as a further component. In the case of the TVIS device of the company GEA Tuchenhagen GmbH, the sensor and the electronic circuitry are integrated in a component, which is arranged on a further component, which includes the sensor tower that accommodates the movement of the magnet, and the pneumatic system that actuates the valve. In the case of the IntelliTop embodiment by the company Südmo, the sensor tower, the sensors, the electronic circuitry, the LED display and a central fastening thread for the housing cover are integrated in a component. In the case of the ThinkTop by the company Alfa Laval, the electronic circuitry for the sensor is integrated in the housing. This model does not have a sensor tower.

The known devices that have a sensor tower have the disadvantage that, in the case of a restructuring for the use of other types of sensor, for example a magnetostrictive sensor instead of a sensor that uses Hall-effect sensors, it is necessary for the sensor tower, including the components connected thereto, to be restructured.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the process valve to be actuated having an actuating element arranged on a valve rod, the device having a hood entered by the actuating element, at least upon the valve actuation, and the device having an electronic module and a sensor module, the sensor module having the hood, and the electronic module being realized as a component and the sensor module being realized as a further component.

Preferably, the device for actuating a process valve, according to this embodiment of the invention, can also have one or more features of the previously specified embodiments of the invention.

According to the invention, the sensor can be arranged in a component that is separate from the sensor tower.

According to the invention, the electronic module can be designed and arranged for evaluating a plurality of sensor modules or sensors. In this case, the output signals of the individual sensor modules or sensors can the same, or they can also differ. For example, sensor modules and/or sensors having analog or digital output signals can be combined with one another.

According to the invention, the device can have a bottom part on which the electronic module and/or the sensor module is/are mounted.

According to the invention, the device can have a housing.

According to the invention, the housing can include the bottom part and/or a cover.

According to the invention, there is also specified a device for actuating a process valve, according to one of the previously specified embodiments of the invention.

According to the invention, the process valve can be a disc valve and/or ball valve. According to the invention, the process valve can be a single-seat valve or a double-seat valve.

According to the invention, the actuator can be a lifting actuator and/or a rotary actuator.

According to the invention, the actuator can be a pneumatic actuator.

According to the invention, the valve member can be realized and arranged in such a way that the closing motion is a linear motion or rotary motion.

According to the invention, the valve member can be a valve stem, a valve disc, a valve cone, a valve flap, a valve ball, a valve slider, a valve pin, a valve diaphragm or a valve bellows.

According to the invention, the actuating element can be a magnet.

According to the invention, the actuating element can have dielectric and/or ferromagnetic material.

According to the invention, the process valve can be a double-seat valve having at least two linear sensors.

According to an embodiment of the invention, there is thus also specified a double-seat valve comprising at least two linear sensors. In this case, the double-seat valve can have one or more of the features of the previously mentioned embodiments of the invention.

The invention is explained more fully in the following, with reference to the exemplary embodiments shown in the figures.

According to the invention, the cover, or the outer housing, of the device can also be realized entirely from a translucent and/or transparent and/or non-opaque material, or have a window that is realized from a translucent and/or transparent and/or non-opaque material. The window can be realized by omission of the colouring pigments in the region, or it can be realized from another material.

According to the invention, a plurality of regions of the outer housing, or cover, of the device can also be realized from a translucent and/or transparent and/or non-opaque material, for example in the form of a series of windows. According to the invention, a fully transparent outer housing can be provided. This has the advantage that the production is less expensive.

The at least partial realization of the hood from a translucent and/or transparent and/or non-opaque material has the advantage that the lifting motion of the actuating element, and thus of the process valve, can be seen visually by the technician. The position of the actuating element, which is mounted, for example, on the extension of the valve rod for controlling the valve setting, is a direct measure of the position of the process valve. This is advantageous particularly in the case of the manual positioning of Hall-effect sensors, because a more precise verification of the closing function of the valve can be achieved by a more precise arrangement of the Hall-effect transistors.

In the case of the known devices for actuating a valve for uses in a foodstuffs technology, the sensor used for determining the relative position of the magnet is always integrated, with the associated electronic circuitry, in a component. For example, in the case of the CU3 device of APV ROSISTA GmbH, the sensor and the electronic circuitry are integrated in a component, and the tower accommodating the movement of the magnet, and the base part of the housing are provided as a further component. In the case of the TVIS device of the company GEA Tuchenhagen GmbH, the sensor and the electronic circuitry are integrated in a component, which is arranged on a further component, which includes the sensor tower that accommodates the movement of the magnet, and the pneumatic system that actuates the valve. In the case of the lntellitop embodiment by the company Südmo, the sensor tower, the sensors, the electronic circuitry, the LED display and a central fastening thread for the housing cover are integrated in a component. In the case of the ThinkTop by the company Alfa Laval, the electronic circuitry for the sensor is integrated in the housing. This model does not have a sensor tower.

The known devices that have a sensor tower have the disadvantage that, in the case of a restructuring for the use of other types of sensor, for example a magnetostrictive sensor instead of a sensor that uses Hall-effect sensors, it is necessary for the sensor tower, including the components connected thereto, to be restructured.

Accordingly it is an object of the present invention to provide a device for actuating a valve in foodstuffs technology, wherein the same bottom part, or base part, can be used for different sensors.

This object of the invention is achieved by means of the features of Claim 12. Advantageous developments of the invention are specified in the dependent claims.

According to an embodiment of the invention, there is specified a device for actuating a process valve, for use in foodstuffs technology, that has a valve member, an actuating element being moved upon the shifting of the valve, in such a way that the position of the actuating element is a measure of the position of the valve member, the device for actuating a process valve having a sensor that is arranged and/or realized in such a way that its output signal is a measure of the position of the actuating element, the process valve to be actuated having an actuating element arranged on a valve rod, the device having a hood entered by the actuating element, at least upon the valve actuation, and the device having an electronic module and a sensor module, the sensor module having the hood, and the electronic module being realized as a component and the sensor module being realized as a further component.

Preferably, the device for actuating a process valve, according to this embodiment of the invention, can also have one or more features of the previously specified embodiments of the invention.

According to the invention, the sensor can be arranged in a component that is separate from the sensor tower.

According to the invention, the electronic module can be designed and arranged for evaluating a plurality of sensor modules or sensors. In this case, the output signals of the individual sensor modules or sensors can the same, or they can also differ. For example, sensor modules and/or sensors having analog or digital output signals can be combined with one another.

According to the invention, the device can have a bottom part on which the electronic module and/or the sensor module is/are mounted.

According to the invention, the device can have a housing.

According to the invention, the housing can include the bottom part and/or a cover.

According to the invention, there is also specified a device for actuating a process valve, according to one of the previously specified embodiments of the invention.

According to the invention, the process valve can be a disc valve and/or ball valve. According to the invention, the process valve can be a single-seat valve or a double-seat valve.

According to the invention, the actuator can be a lifting actuator and/or a rotary actuator.

According to the invention, the actuator can be a pneumatic actuator.

According to the invention, the valve member can be realized and arranged in such a way that the closing motion is a linear motion or rotary motion.

According to the invention, the valve member can be a valve stem, a valve disc, a valve cone, a valve flap, a valve ball, a valve slider, a valve pin, a valve diaphragm or a valve bellows.

According to the invention, the actuating element can be a magnet.

According to the invention, the actuating element can have dielectric and/or ferromagnetic material.

According to the invention, the process valve can be a double-seat valve having at least two linear sensors.

According to an embodiment of the invention, there is thus also specified a double-seat valve comprising at least two linear sensors. In this case, the double-seat valve can have one or more of the features of the previously mentioned embodiments of the invention.

The invention is explained more fully in the following, with reference to the exemplary embodiments shown in the figures.
- Fig. 1: is a sectional view of a single-seat valve, according to the invention, comprising a device, according to the invention, for actuating the process valve for use in foodstuffs technology.
- Fig. 2: is a sectional view of a double-seat valve, according to the invention, comprising a device, according to the invention, for actuating the process valve for use in foodstuffs technology.
- Fig. 3: is an exploded view of a device, according to the invention, for actuating a process valve for use in foodstuffs technology.
- Fig. 4: is a side view of a single-seat valve, to which a device, according to the invention, for actuating a process valve for use in foodstuffs technology can be connected.
- Fig. 5: is a sectional view of a disc valve, according to the invention, comprising a device, according to the invention, for actuating the process valve for use in foodstuffs technology.
- Fig. 6: is a side view of an embodiment of a sensor module for a device, according to the invention, for actuating a process valve.
- Fig. 7: is a side view of an embodiment of a sensor module for a device, according to the invention, for actuating a process valve.
- Fig. 8: is a side view of an embodiment of a sensor module for a device, according to the invention, for actuating a process valve.
- Fig. 9: is a side view of an embodiment of a sensor module for a device, according to the invention, for actuating a process valve.

The following references are used in the description of the exemplary embodiments:
- 1: single-seat valve
- 2: housing
- 3: disc seal (can also be named as seat seal)
- 4: valve stem
- 5: housing seal
- 6: clamp
- 7: guide bushing
- 8: lantern
- 9: air connector
- 10: actuator
- 11: vent plug
- 12: centring disc
- 13: nut
- 14: magnet
- 15: connecting rod (can also be named as tie rod)
- 20: double-seat valve
- 21: magnet
- 22: connecting rod (can also be named as tie rod)
- 23: magnet
- 24: pipeline
- 25: pipeline
- 26: leakage cavity
- 27: drainage pipe
- 28: cleaning connector
- 30: main cylinder (for upper seat lift and opening the process valve)
- 31: connector (compressed air, pressure gas, etc. for upper seat lift)
- 32: piston (upper seat lift, opening the process valve)
- 33: piston seal
- 34: connector (opening the process valve)
- 40: spring cylinder
- 41: main closing spring
- 50: lower valve stem
- 51: coupling (lower valve stem)
- 60: seat lantern
- 71: upper seat seal
- 72: lower seat seal
- 73: middle seal
- 74: lower stem seal
- 75: upper stem seal
- 80: cylinder (for lower seat lift)
- 81: connector (compressed air, pressure gas, etc. for lower seat lift)
- 82: piston (lower seat lift)
- 83: piston seal
- 84: check spring
- 90: upper valve stem
- 91: coupling (upper valve stem)
- 92: central spring
- 100: device for actuating a process valve
- 110: housing cover
- 111: light indicator
- 120: electronic module
- 130: solenoid valve
- 140: base part
- 141: connector part for electric leads
- 142: connector part for pneumatic lines
- 143: connector part for pneumatic lines
- 144: compressed-air sensor
- 150: sensor module having magnetostrictive linear sensor
- 151: magnetostrictive linear sensor
- 152: extension
- 153: fastening flange
- 154: hood
- 200: device for actuating a process valve
- 250: sensor module having Hall-effect sensors
- 251: hall-effect sensor
- 252: threaded rod
- 253: fastening flange
- 254: hood
- 300: device for actuating a process valve
- 310: housing cover
- 320: electronic module
- 341: connector part for electric leads
- 350: sensor module having magnetostrictive linear sensor
- 351: linear sensor (internal)
- 352: extension
- 353: fastening flange
- 360: external linear sensor
- 361: connecting cable
- 400: disc valve (can also be named as butterfly valve) with rotary actuator
- 402: housing flange halves
- 403: flap seal
- 404: valve flap
- 408: lantern
- 410: rotary actuator
- 414: magnet
- 415: piston rod (extension of the piston in the rotary actuator)
- 550: sensor module
- 551: linear sensor
- 554: hood
- 555: window
- 556: window
- 557: window
- 650: sensor module
- 651: hall-effect sensor
- 652: threaded rod
- 654: hood
- 655: window
- 656: window
- 657: window
- 750: sensor module
- 751: linear sensor
- 754: hood
- 756: window
- 758: read-off device
- 850: sensor module
- 851: hall-effect sensor
- 852: threaded rod
- 854: hood
- 856: window
- 858: read-off device

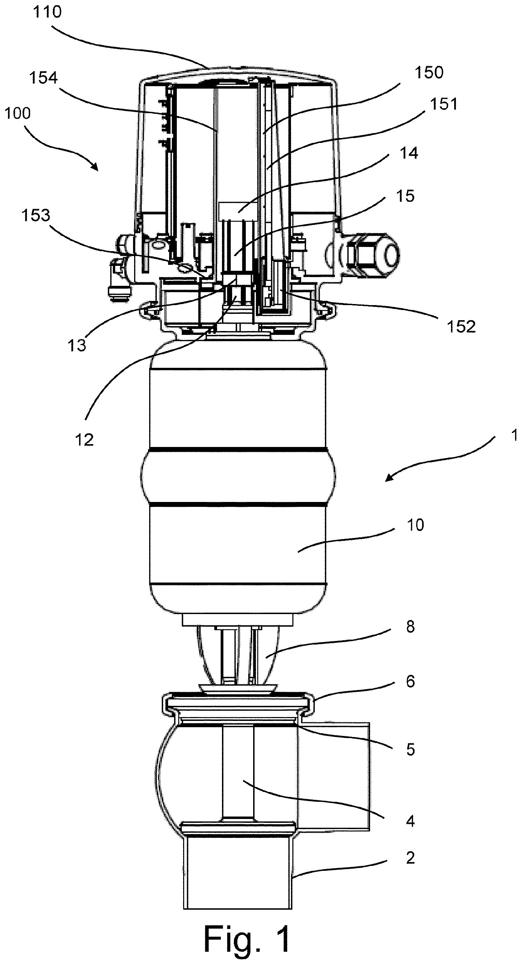

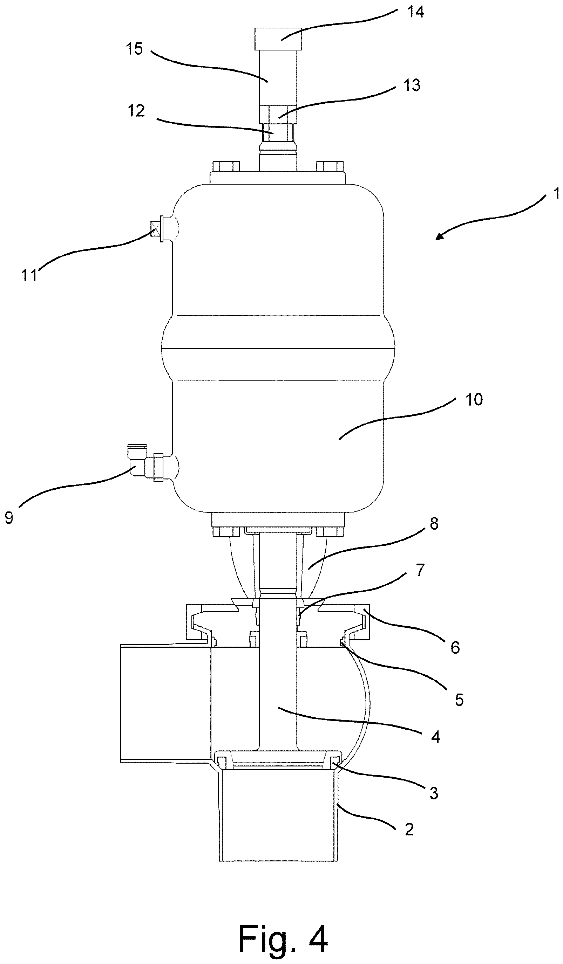

Fig. 1 shows a sectional view of a single-seat valve 1 according to the invention, comprising a device 100, according to the invention, for actuating the single-seat valve 1 or use in foodstuffs technology, according to an embodiment of the invention. The single-seat valve 1 has a housing 2, a disc seal 3 (see Fig. 4), a valve stem 4, a housing seal 5, a clamp 6, a guide bushing 7 (see Fig. 4), a lantern 8, an actuator 10, a centring disc 12, a nut 13, a magnet 14 and a connecting rod 15. The magnet 14 is fastened to the connecting rod 15, which moves concomitantly as the single-seat valve 1 shifts. The position of the magnet is thus a measure of the position of the valve stem 4 in the single-seat valve 1. Owing to the structure of the single-seat valve 1, reference is made to Fig. 4 and its description.

Arranged on the single-seat valve is a device 100 for actuating the single-seat valve 1. The device 100 has a housing cover 110. A sensor module 150, comprising a magnetostrictive linear sensor 151, is provided in the device 100. The sensor module 150 is mounted on the device 100 by means of a fastening flange 153. The sensor module 150 has an extension 152, which extends downwards over the fastening flange in the direction of the single-seat valve 1. The sensor module 150 further comprises a hood 154, in which the magnet 14 that is arranged on the connecting rod 15 moves along the magnetostrictive linear sensor 151.

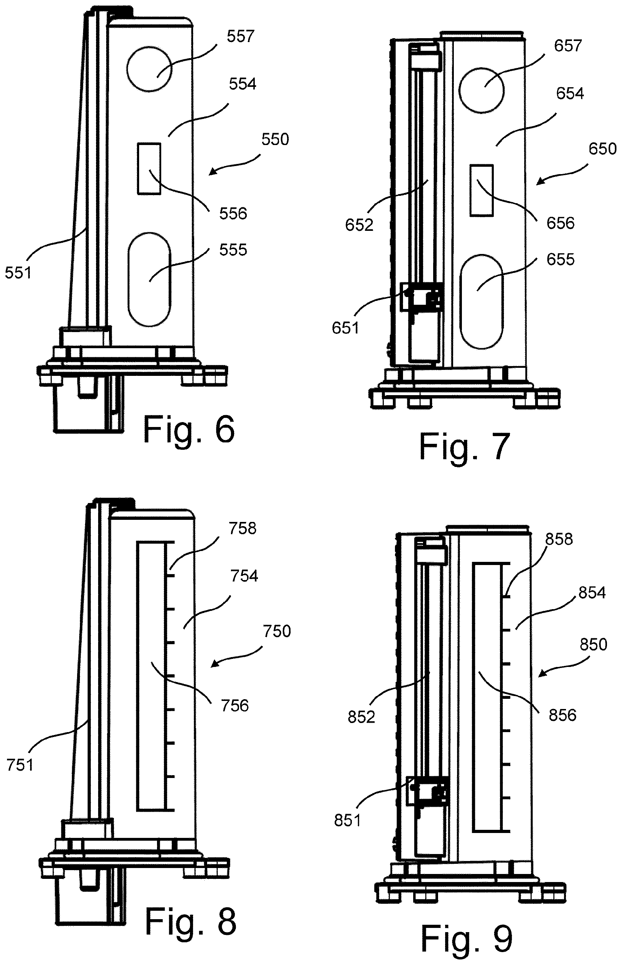

The hood 154 is formed at least partially or entirely from a translucent and/or transparent and/or non-opaque material. In addition or alternatively hood 154 can be provided with windows as shown for instance in Figs. 6 to 9.

The magnetostrictive linear sensor 151 provides a digital output signal, which is a measure of the relative position of the magnet 14 in front of the magnetrostrictive linear sensor 151, and thus of the position of the process valve (single-seat valve).

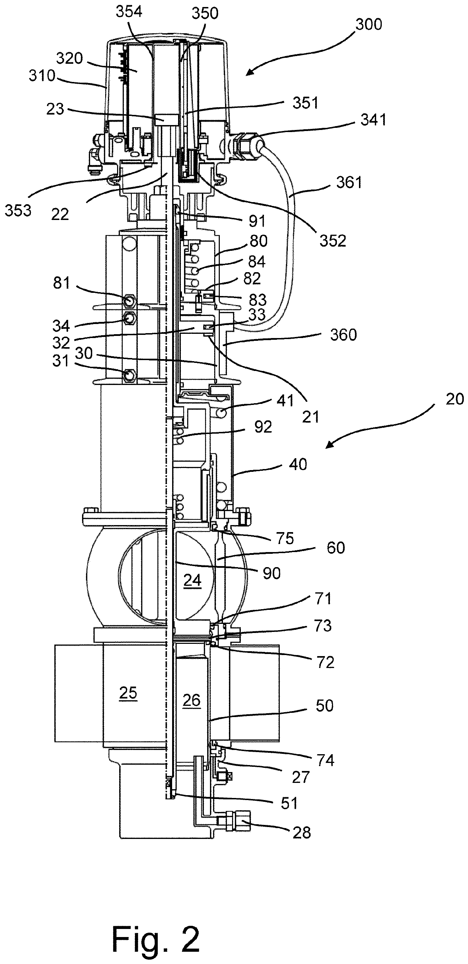

Fig. 2 shows a sectional view of a double-seat valve 20 according to the invention, comprising a device 300, according to the invention, for actuating a process valve for use in foodstuffs technology.

A comprehensive description of a double-seat valve can be found in the product information sheet for the double-seat valve DELTA DA3+ of the present applicant. The double-seat valve 20 has a cylinder 80, displaceably arranged in which is a piston 82, which is sealed in respect of the cylinder 80 by means of a piston seal 83 and is biased downwardly by the return spring 84. The main cylinder 30 has a piston 32, which is sealed in respect of the cylinder 30 via the piston seal 33. The main cylinder 30 serves to open the process valve in the one direction and to lift the upper valve stem 90 in the other direction.

The upper valve stem 90 is coupled to the main cylinder 30 via the coupling 91, while the lower valve stem 50 is coupled to the connecting rod 22 via the coupling 51. Arranged in the upper valve stem 90 is the central spring 12, which positions the lower valve stem 50 in the closed position, via the connecting rod 22, by means of the central spring 92, the thrust ring and the disc spring.

A seat lantern 60 serves for the arrangement of a ring, which accommodates the upper seat seal 71 and the lower seat seal 72, and for the arrangement of the upper stem seal 75. The lower stem seal 51 is accommodated in a groove of the lower base plate of the valve housing.

The double-seat valve 20 has an upper valve stem 90 and a lower valve stem 50, which, in the closed position, are closed by the spring force of the main closing spring 41 arranged in the spring cylinder 40 and by the spring force of the central spring 92, and which separate media (products A, B and cleaning fluid) from each other in the pipelines 24 and 25. Between the valve stems 50, 90 and the drainage pipe 27 there is a leakage cavity 26, which allows leakage fluids or cleaning agents to freely drain off downwards in a pressureless manner.

In order to open the double-seat valve 20, the upper valve stem 90 is moved against the middle seal 73 through actuation of the device 300. For this purpose, compressed air is applied to the connector 34 of the main cylinder 30. This causes the leakage cavity 26 to be closed in respect of the pipelines 24 and 25. The two valve stems 50, 90 then move downwards into the open position, in which the pipelines 24 and 25 are connected to one another.

The double-seat valve DELTA DA3+ offers the possibility of cleaning all parts, including the seals, that are in contact with product.

For the purpose of cleaning the upper valve region, cleaning fluid is introduced into the pipeline 24. The upper valve stem 90 is lifted through compressed air being applied to the connector 31 of the main cylinder 30, by means of the control unit. The upper valve stem 90 is raised upwards, contrary to the opening direction, the lift being limited by a metallic stop. Cleaning fluid flows over the upper seat seal 71 and the upper stem seal 75. At the same time, the leakage cavity 26 is cleaned. The cleaning fluid flows downwards in a pressureless manner.
For the purpose of cleaning the lower valve region, cleaning fluid is introduced into the pipeline 25. The lower valve stem 50 is lifted through compressed air being applied to the connector 81 of the cylinder 80, by means of the control unit. The lower valve stem 50 moves upwards, contrary to the opening direction, the lift being limited by a metallic stop. Cleaning fluid flows over the lower seat seal 72 and the middle seal 73, as well as the lower stem seal 74. At the same time, the leakage cavity 26 is cleaned. The cleaning fluid flows downwards in a pressureless manner.

The device, according to the invention, for actuating a process valve can be used, not only for the double-seat valve shown in Fig. 2 but, advantageously, for all process valves that are actuated by at least two control valve arrangements (typically solenoid valves), and to interconnect at least two pipelines, in which, typically, there are two differing foodstuff products, or one foodstuff product and a cleaning fluid.

The double-seat valve 20 has a connecting rod 22, on which a magnet 23 is arranged. The position of the connecting rod 22 is a measure of the position of the lower valve stem 50.

The double-seat valve further has a magnet 21, which is mounted on the piston 32. The piston 32 serves to open and close the valve, and for the upper seat lift. The position of the piston 32 is a measure of the position of the upper valve stem, and thereby of the open position and closed position of the double-seat valve 20.

Arranged on the double-seat valve 20 is a device 300 for actuating the double-seat valve. The device 300 has a housing cover 310, an electronic module 320, a connector part 341 for electric leads, and a sensor module 350. Arranged in the sensor module 350 is a linear sensor 351, which extends in an extension 352. The device 300 further comprises a fastening flange 353 for fastening the device 300 to the double-seat valve 20. An external linear sensor 360 is connected to the device via a connecting cable 361.

The external linear sensor 360 serves to sense the position of the magnet 21 and thereby the position of the upper valve stem 90. The internal linear sensor 351 serves to sense the position of the magnet 23 and thereby the position of the lower valve stem 50.

The linear sensor 351 or 360 can be a magnetostrictive or magnetoresistive sensor. Preferably, magnetostrictive sensors are used, owing to the simpler evaluation of the output signal.

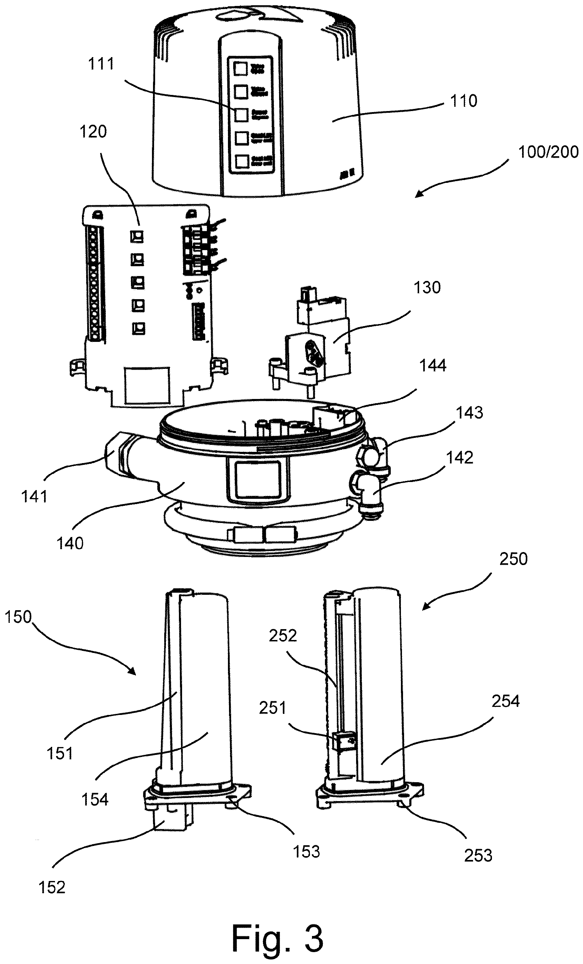

Fig. 3 shows an exploded view of the device 100, according to the invention, for actuating a process valve for use in foodstuffs technology. The device has a housing cover 110, on which a light indicator 111 is provided. The device 100 comprises an electronic module 120 and at least one solenoid valve 130. In the case of devices for actuating double-seat valves with lift, three solenoid valves, for example, are provided, whereas normally one solenoid valve 130 is provided in the case of devices for actuating double-seat valves without lift, or for actuating single-seat valves.

The device 100 has a base part 140 comprising a connector part 141 for electric leads, a connector part 142 for pneumatic lines, and a connector part 143 for pneumatic lines. Also arranged in the base part is a compressed-air sensor 144, which is designed and arranged for monitoring the control-air pressure for actuating the process valve. In the case of devices having a plurality of solenoid valves, a plurality of pressure sensors or common pressure sensors can also be used accordingly.

Represented in Fig. 3 are a sensor module 150 that comprises a magnetostrictive linear sensor 151, and a sensor module 250 that comprises Hall-effect sensors 251, which sensor modules can be inserted alternatively in the device 100. The development, according to the invention, whereby the electronic module is realized as a component and the sensor module is realized as a further component has the advantage that alternative embodiments of the device having differing sensor modules can be produced easily. Advantageously, the electronic module 120 is realized and designed in such a way that it can process the signals of all wanted and simultaneously used sensor types.

The sensor module 150 can be mounted on the device 100 by means of the fastening flange 153. Alternatively, the sensor module 250 can be mounted on the device 100 by means of the fastening flange 253.

The sensor module 150 has an extension 152, which extends downwards over the fastening flange 153 in the direction of the single-seat valve 1. The sensor module 150 further comprises a hood 154, in which, for example, a magnet arranged on a connecting rod can move along the magnetostrictive linear sensor 151, as shown, for example, in Fig. 1 with reference to the exemplary embodiment, in which the device 100 is mounted on a single-seat valve 1.

The sensor module 250 has a threaded rod 252, on which Hall-effect sensors 251 are arranged. By means of the threaded rod 252, the Hall-effect sensors 251 can be arranged at wanted positions at which the presence of a magnet is to be detected. The sensor module 250 likewise further comprises a hood 254, in which, for example, a magnet arranged on a connecting rod can move along the Hall-effect sensors 251.
The hood 254 is formed at least partially or entirely from a translucent and/or transparent and/or non-opaque material. In addition or alternatively hood 254 can be provided with windows as shown for instance in Figs. 6 to 9.
Fig. 4 shows a cross-sectional view of the single-seat valve 1 represented in Fig. 1. A comprehensive description can be found in the product information sheet for the SW4 valve of the present applicant. The single-seat valve 1 shown in Fig. 4 has a housing 2. The valve stem 4 serves to open and close the valve 1. The valve 1 has a disc seal 3.

Provided in a lantern 8 is a guide bushing 7, which locates (positions) the valve stem 4, and a stem seal 5, which seals the valve stem outwardly (to the atmosphere). The valve seal 5 seals the lantern 8 in respect of the housing 2. The lantern 8 is fastened to the housing 2 by means of a clamp. The actuator 10 has an air connector 9 and a vent plug 11. Provided at the upper end are a centring disc 12, a nut 13 and a magnet operating lobe 14, which is provided on the end of the connecting rod 15. The magnet operating lobe 14 projects out of the actuator 10 and engages in a device for actuating a process valve (for example, control unit), which is provided above the actuator 10. The relative position of the magnet operating lobe 14 in the control unit, i.e. the depth of penetration of the magnet operating lobe 14, is a measure of the position of the connecting rod 15, or of the valve stem 4 of the valve 1, and thus of the position of the valve.

The valve 1 represented in Fig. 4 is an example of a valve for which the device according to the invention can be used. Clearly, the invention can also be used for other valves that have an actuating element (for example, a magnet) arranged on a connecting rod or piston rod, the connecting rod engaging in the device, for actuating the valve, that is to be arranged on the valve.

According to an embodiment of the invention, a sensor module having a hood that is realized, at least partially, from a translucent and/or transparent and/or non-opaque material can be arranged on a process valve. For example, a sensor module according to Fig. 6, 7, 8 or 9 can be arranged on a process valve according to Fig. 2, 4 or 5. This can be effected by means of a corresponding adapter, if necessary.

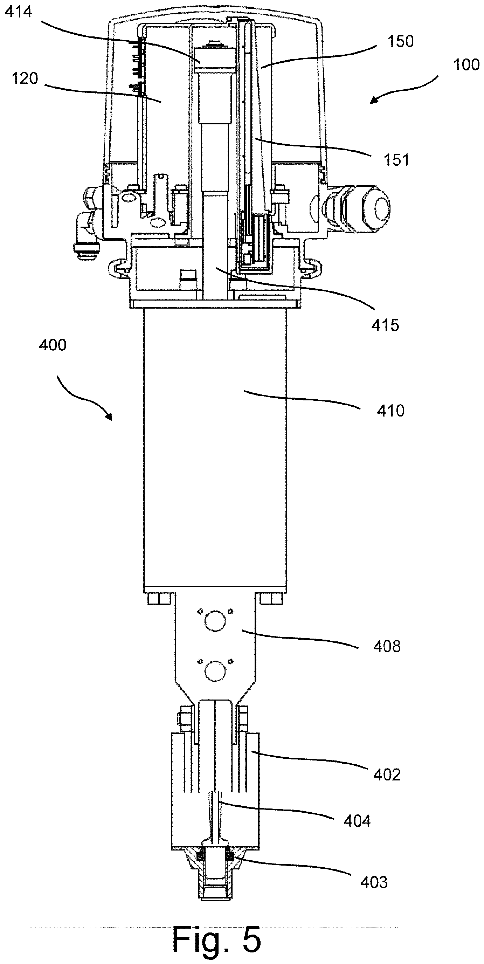

Fig. 5 shows a sectional view of a disc valve, according to the invention, comprising a device, according to the invention, for actuating the process valve for use in foodstuffs technology, which device corresponds substantially to the representation of Fig. 1. The differences in respect of the embodiment of Fig. 1 are described in the following, reference being made otherwise to the description of the exemplary embodiment of Fig. 1.

Represented in Fig. 5 is the device 100 with a disc valve 400, which comprises a rotary actuator 410. The disc valve 400 has two housing flange halves 402 and a lantern 408. The rotary actuator 410 actuates a valve flap 404, which can close the disc valve 400 by bearing on a flap seal 403. At the upper end, a piston rod 415 is provided as an extension of the piston in the rotary actuator 410, a magnet 414 being arranged on said piston rod. In correspondence with the embodiment of Fig. 1, the magnet 414 is arranged in the sensor module 150 and moves along the magnetostrictive linear sensor 151 upon the actuation of the disc valve 400.

Figures 6 to 9 show a side view of embodiments of a sensor module for a device, according to the invention, for actuating a process valve. Only the differences in respect of the sensor module shown in Fig. 1 are described in the following. Otherwise, reference is made to the description of Fig. 1. Components that are the same or similar are denoted by a reference incremented by 100.

The sensor module 550, shown in Fig. 6, for a device, according to the invention, for actuating a process valve has a linear sensor 551 and a hood (for example, a sensor tower) 554 , in which a series of windows 555, 556 and 557 is provided.

The sensor module 550, shown in Fig. 7, for a device, according to the invention, for actuating a process valve has at least one, and preferably a plurality of, Hall-effect sensor(s) 651, and a hood (for example, a sensor tower) 654, in which a series of windows 655, 656 and 657 is provided.

The embodiments of Figures 8 and 9 correspond substantially to the embodiments of Figures 6 and 7, only one window 756 and 856, respectively, being provided instead of the three windows, and a read-off device 758 and 858, respectively, which can be realized, for example, to be similar to a measuring scale, as shown, being provided at the edge of the window. A similar or corresponding read-off device can also be provided in the case of hoods without windows that are realized from a translucent and/or transparent and/or non-opaque material.

The windows 555, 556 and 557 and/or 655, 656 and 567 and/or 756 and/or 856 are realized from a translucent and/or transparent and/or non-opaque material, and provide a technician with a view of an actuating element arranged in the hood. This facilitates working and improves the accuracy of setting and control.

Other appropriate arrangements of windows and/or read-off devices are conceivable. Clearly, the hood can also be realized entirely from a translucent and/or transparent and/or non-opaque material, a read-off device, for example in the form of knurls and/or recesses and/or colourations preferably being able to be provided.

Alternative embodiments of the exemplary embodiments shown in the figures or described above are conceivable. For example, a different pressure medium, or pressure gas, can be used instead of a preferred actuation of the process valve by means of compressed air.

## Claims

1. Process valve actuation device (100; 200; 300; 400), for use in foodstuffs technology, the device being connectable to a process valve that has a valve member, an actuating element (14; 21, 23; 414) arranged on a valve rod (15; 22), the actuating element (14; 21, 23; 414) being moved upon the shifting of the valve, in such a way that the position of the actuating element (14; 21, 23; 414) is a measure of the position of the valve member, the device having at least one sensor that is arranged and/or realized in such a way that its output signal is a measure of the position of the actuating element (14; 21, 23; 414), and wherein the device has a hood (154; 254; 554; 654; 754; 854), into which the actuating element (14; 21, 23; 414) enters at least upon the valve actuation,
**characterized in that**
at least one of said sensors is a magnetostrictive sensor (151, 351),and the device further has an electronic module (120) and a sensor module (150; 250; 350; 550; 650; 750; 850), and the electronic module being realized as a component and the sensor module (150; 250; 350; 550; 650; 750; 850) being realized as a further component, the sensor module (150; 250; 350; 550; 650; 750; 850) having the hood (154; 254; 554; 654; 754; 854) and at least one sensor, and the electronic module (120) is designed and arranged for evaluating a plurality of sensors.

2. Process valve actuation device (100; 200; 300; 400) according to claim 1, **characterized in that** the device (100; 200; 300; 400) has a bottom part (140) on which the electronic module (120) and/or the sensor module (150; 250; 350; 550; 650; 750; 850) is/are mounted.

## Patentansprüche

1. Prozessventil-Ansteuervorrichtung (100; 200; 300; 400), zur Verwendung in der Lebensmitteltechnik, wobei die Vorrichtung angeschlossen werden kann an: ein Prozessventil, das ein Ventilglied aufweist, ein Betätigungselement (14; 21, 23; 414), das auf einer Ventilstange (15; 22) angeordnet ist, wobei das Betätigungselement (14; 21, 23; 414) bei Verstellen des Ventils bewegt wird, derart, dass die Position des Betätigungselements (14; 21, 23; 414) ein Maß für die Stellung des Ventilglieds ist, wobei die Vorrichtung mindestens einen Sensor aufweist, der derart angeordnet und/oder ausgebildet ist, dass sein Ausgangssignal ein Maß für die Position des Betätigungselementes (14; 21, 23; 414) ist, und wobei die Vorrichtung eine Haube (154; 254; 554; 654; 754; 854) aufweist, in welche das Betätigungselement (14; 21, 23; 414) zumindest bei Ventilbetätigung eintritt,
**dadurch gekennzeichnet, dass**
mindestens einer der Sensoren ein magnetostriktiver Sensor (151, 351) ist, und die Vorrichtung weiter ein Elektronikmodul (120) und ein Sensormodul (150; 250; 350; 550; 650; 750; 850) aufweist, und das Elektronikmodul als ein Bauelement ausgebildet ist und das Sensormodul (150; 250; 350; 550; 650; 750; 850) als ein weiteres Bauelement ausgebildet ist, wobei das Sensormodul (150; 250; 350; 550; 650; 750; 850) die Haube (154; 254; 554; 654; 754; 854) und mindestens einen Sensor aufweist, und das Elektronikmodul (120) für ein Auswerten einer Mehrzahl von Sensoren ausgebildet und angeordnet ist.

2. Prozessventil-Ansteuervorrichtung (100; 200; 300; 400) nach Anspruch 1, **dadurch gekennzeichnet, dass** die Vorrichtung (100; 200; 300; 400) einen Bodenteil (140) aufweist, auf dem das Elektronikmodul (120) und/oder das Sensormodul (150; 250; 350; 550; 650; 750; 850) montiert ist/sind.

## Revendications

1. Dispositif d'actionnement d'une vanne de processus (100; 200; 300; 400) à utiliser dans la technologie d'aliments, le dispositif étant connectable à une vanne de processus qui possède un élément de vanne, un élément d'actionnement (14 ; 21, 23 ; 414) agencé sur une tige de vanne (15 ; 22), l'élément d'actionnement (14 ; 21, 23 ; 414) étant déplacé lors du déplacement de la vanne, de telle manière que la position de l'élément d'actionnement (14 ; 21, 23 ; 414) est une mesure de la position de l'élément de vanne, le dispositif ayant au moins un détecteur qui est agencé et/ou réalisé de telle manière que son signal de sortie est une mesure de la position de l'élément d'actionnement (14 ; 21, 23 ; 414), et dans lequel le dispositif possède un capuchon (154 ; 254; 554 ; 654; 754 ; 854) dans lequel l'élément d'actionnement (14 ; 21, 23; 414) pénètre au moins lors de l'actionnement de la vanne,
**caractérisé en ce que**
au moins l'un desdits détecteurs est un détecteur magnétostrictif (151, 351), et le dispositif possède en outre un module électronique (120) et un module de détecteur (150 ; 250 ; 350 ; 550 ; 650 ; 750 ; 850), et le module électronique étant réalisé sous la forme d'un composant et le module de détecteur (150 ; 250 ; 350 ; 550 ; 650 ; 750 ; 850) étant réalisé sous la forme d'un composant supplémentaire, le module de détecteur (150 ; 250 ; 350 ; 550 ; 650 ; 750 ; 850) ayant le capuchon (154 ; 254 ; 554 ; 654; 754 ; 854) et au moins un détecteur, et le module électronique (120) est conçu et agencé pour évaluer une pluralité de détecteurs.

2. Dispositif d'actionnement d'une vanne de processus (100 ; 200 ; 300 ; 400) selon la revendication 1, **caractérisé en ce que** le dispositif (100 ; 200 ; 300 ; 400) possède une partie inférieure (140) sur laquelle le module électronique (120) et/ou le module de détecteur (150 ; 250 ; 350 ; 550 ; 650 ; 750 ; 850) est/sont monté(s).
